# EUROPEAN PATENT SPECIFICATION

(11) **EP 0 302 683 B1**
(45) Date of publication and mention of the grant of the patent: **29.06.1994**
(21) Application number: 88307065.8
(22) Date of filing: 01.08.1988
(51) Int. Cl.: G11B 5/596, G11B 5/55, G11B 5/56, G11B 5/58

(54) **A method of, and an apparatus for, controlling the position of a data transducer head**
Verfahren und Vorrichtung zur Steuerung der Position eines Wandlerkopfes für Daten
Procédé et appareil pour contrôler la position d'une tête de transducteur de données

(30) Priority: 06.08.1987 JP 195436/87
(43) Date of publication of application: 08.02.1989
(73) Proprietor: International Business Machines Corporation, Armonk, N.Y. 10504 (US)
(72) Inventor: Takita, Kazuyuki, Hachiohji-shi Tokyo-to (JP)
(74) Representative: Moss, Robert Douglas

(56) References cited:
- EP-A- 0 002 133
- EP-A- 0 229 891
- PATENT ABSTRACTS OF JAPAN, unexamined applications, P field, vol. 8, no. 245,November 10, 1984 THE PATENT OFFICE JAPANESE GOVERNMENT page 71 P 312
- PATENT ABSTRACTS OF JAPAN, unexamined applications, P field, vol. 8, no. 282,December 22, 1984 THE PATENT OFFICE JAPANESE GOVERNMENT page 47 P 323
- PATENT ABSTRACTS OF JAPAN, unexamined applications, P field, vol. 8, no. 282,December 22, 1984 THE PATENT OFFICE JAPANESE GOVERNMENT page 47 P 323

## Description

This invention relates to a method of, and an apparatus for, controlling the position of a data transducer head so that it follows a predetermined track on a record disk.

In a record disk unit, accurate positioning of the head on a target track is an essential factor in providing the disk unit with a large capacity, and quick positioning of the head on the target track is also an essential factor in providing the disk unit with a high speed. In a high-density disk unit, in order to accomplish the foregoing, a voice coil motor is used as a driving device, positional information previously written on the disk surface is detected by the head and fed back, and the voice coil motor is driven by a closed-loop servo system to perform the positioning of the head. The head positioning operation is generally classified into two modes. One is the velocity control mode, and the other is the track following mode. In the velocity control mode, the velocity of the head is controlled to move the head to the neighbourhood of a target track within the minimum time. After the head reaches the neighbourhood of the track, control goes to the track following mode.

In the track following mode, control is made so as to zero out the position error between the head and the target track, whereby the head is positioned on the target track with high precision, completing the head positioning operation. The description of these head positioning operations is given in R.K. Oswald, "Design of a Disk File Head-Positioning Servo", IBM Journal of Research and Development, November 1974, pp. 506-512.

The sector servo system (or buried servo system) is attracting attention as a head positioning system suitable for small-sized and large-capacity disk units. This is because this system has the following advantages as compared with the conventional servo system which uses a dedicated servo surface:-
1. Since the servo position information is placed at the beginning of the sectors on the data surface instead of being recorded by occupying one surface of a disk medium such as the servo surface, the utility factor of the data area of the disk surface is high.
2. Since the servo position information is placed on each surface of the disk, it may be possible to neglect the deviation of the head from the target track position (off-track) which is caused by the inclination of the spindle for rotating the disk medium due to heat or the like.

The sector servo system will now be described with reference to the following figures of the accompanying drawings:-
Fig. 4 is a diagram explaining the sampling and the locus of the head.
Fig. 5 is a diagram indicating the disposition of the servo position information on a record disk and
Figs. 6 through 8 are diagrams indicating the change in the head position and velocity under various conditions.

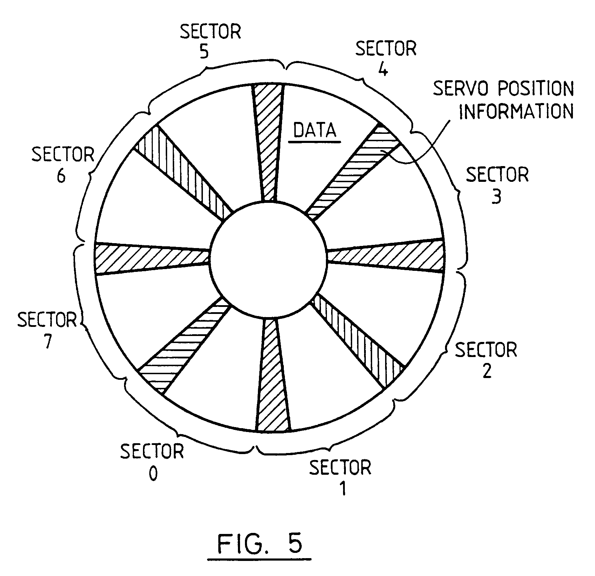

The layout of the servo position information area and the data area on the surface of a record disk in a sector servo system is shown in Fig. 5. The positioning control of this sector servo system adopts sampled data control, as compared with the conventional servo surface servo system which is a continuous system control, because the servo position information is placed at the beginning of the sectors and its detection becomes discontinuous. One method of head positioning control using this sector servo system is described in "HIGH TRACK DENSITY FOR MAGNETIC DISK DRIVE WITH AN 'EMBEDDED SERVO' POSITIONING SYSTEM" by C. Maury, IEEE TRANSACTION ON MAGNETICS, VOL. MAG-17, NO.4, JULY 1981, pp. 1396-1402.

On the other hand, as the speed-up and cost reduction of microprocessors have proceeded, it has become possible to make the processors perform various calculations to carry out estimative control. To perform estimative control, it is necessary to cause an arithmetic device called an estimator to process much data. One such method is disclosed in EP-A- 243821.

The track following mode in head positioning control is most important in allowing the head positioning to be performed with high precision and at a high speed. In performing the sampled data control, if it is assumed that the voice coil is driven with current, the driving current which is to flow after the present sampling and till the next sampling is In, the head position (distance to the target track) detected at the present sampling is Xn, and the head velocity is Vn, the following relation is applied.

$\text{In = -A Xn - B Vn (1)}$

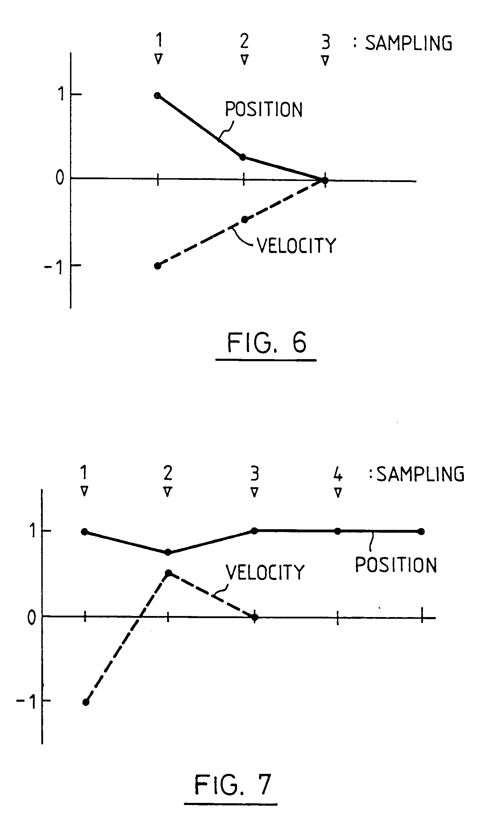

It is known to drive the voice coil with a driving current given by the equation (1) only. The values of constants A and B are optimized on the basis of the maximum current value, sample period and mechanical rigidity characteristics, depending on each application. When it is desired to position the head on the target track within a short time in the track following mode and terminate the head positioning operation, if it is assumed, for instance, that the sample period is T, the constant for converting acceleration to current is M, and $\text{A=M/T²}$ , $\text{B=3M/(2T)}$ , the head is allowed to rest on the target track at the third sampling. The movement of the head in this case is shown in Fig. 6. Fig. 6 represents a normalisation provided by assuming that the sampling interval is 1, the head position when entering the track following mode is 1, and the velocity of the head when entering the track following mode is -1.

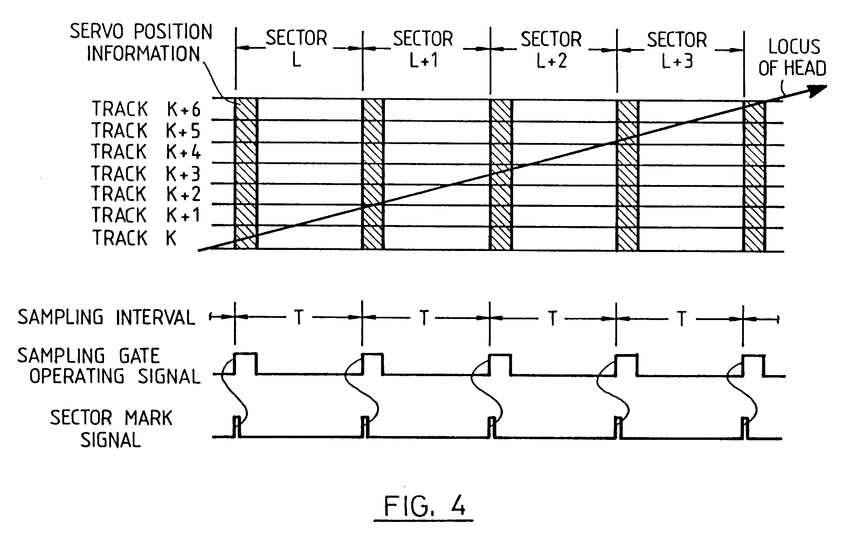

The sampling and the head movement will be described referring to Fig. 4. The servo position information is radially arranged from the center of the disk surface as shown. Since the disk is rotating at a fixed number of revolutions per second and the head is moved by the voice coil motor towards the center of the disk medium, the locus of the head movement is as shown in Fig. 4. In addition, since the disk is rotating at a fixed number of revolutions per second as mentioned above, the sampling interval becomes T which is constant. It is apparent that, if the number of sectors along one track is N and the number of disk revolutions per second is R, $\text{T=1/(NxR)}$ .

The area placed at the beginning of each servo position information and erased by a d.c. current for instance is detected, and a sector mark output is produced. The sector mark triggers the sampling gate for sampling the position signal. The sampling gate is opened for a certain predetermined time, during which the servo position information is taken in. At the same time, the velocity signal is also sampled, providing Xn and Vn of the above equation (1). An arithmetic operation is performed using these to vary a driving current, thereby positioning the head on the target track.

In following a track, the voice coil motor is subjected to a force which is substantially fixed or is of a very low frequency. This force causes an off-track condition of the voice coil motor, and hence of the attached head from the target track. These disturbances are generated by the circulating air flow due to the disk rotation, the force due to the bending of the flexible cable connecting the head and the circuitry portion, gravity, etc. Factors causing the off-track condition exist in addition to the aforementioned disturbances, and one of them is the input voltage offset of the power amplifier supplying the voice coil motor with a current, for instance. The off-track condition due to these largely affects the precision of head positioning.

Taking the aforementioned example, the case will be considered in which a disturbance of an acceleration α is applied to the voice coil motor. That is, it is assumed that the actual acceleration of the voice coil motor is added with α. Thus, αT² always remains at the position term, and there is little off-track while α is small, but as α becomes large, the off-track naturally becomes large, affecting the performance of the disk device. That situation is shown in Fig. 7. Fig. 7, in a similar way to Fig. 6, represents the normalisation provided by assuming that the sampling interval is 1, the head position when entering the track following mode is 1, and the head velocity when entering the track following mode is -1.

In order to reduce such off-track due to disturbances, several measures have so far been proposed.

One method is to use an estimator as disclosed in the aforementioned EP-A- 243821 or "OFFSET FORCE CORRECTION FOR DISK FILE" by J. P. Mantey, IBM Technical Disclosure Bulletin, Vol 21, No 5, October 1978, pp 1792-1795. In this case, the amount of arithmetic operation of the estimator is large, which makes it difficult to adopt the estimator in low-cost, small-sized disk units. Further, since the method as shown in Japanese Published Unexamined Patent Application No 59-146486 needs a current detector for detecting the driving current of a servo motor and also needs several analog circuits such as differential circuits to differentiate the detected velocity of the servo motor, it makes the hardware construction and operation complicated, and it is not suitable for small-sized disk units intended to simplify the circuit construction and operation and to attain cost reduction by digitisation.

The invention seeks to provide an improved method of and a system for controlling the transducer head positioning in the track following mode for small-sized record disk units.

The invention provides a method of controlling the position of a data transducer head so that it follows a predetermined track on a record disk, the method comprising:
applying a driving current of set value to a driving means for positioning the head;
using the head to sample servo position information in a sector on a disk record medium to detect the position of the head at a present sampling instant;
detecting the velocity of the head at the present sampling instant; and
deriving the value of the driving current from the position and velocity of the head detected at the present sampling instant;
the method being characterised in that the derivation of the driving current is also dependent on the velocity of the head at the previous sampling instant and on the value of the driving current set after the previous sampling instant so as to correct for any difference between the set acceleration of the head after the previous sampling instant and the actual acceleration of the head after the previous sampling instant.

In the track following mode, a current value corresponding to an acceleration correction is added to the equation (1). That is, the difference between the head velocity at the previous sampling and the head velocity at the present sampling is proportional to the actual acceleration of the head by the head driving means. The difference between this acceleration and the set acceleration of the head according to the current value which was set for application to the head driving means after the previous sampling is considered due to disturbance. Accordingly, considering the difference between the above two accelerations as an acceleration correction, the current value corresponding to the acceleration correction is added to the equation (1).

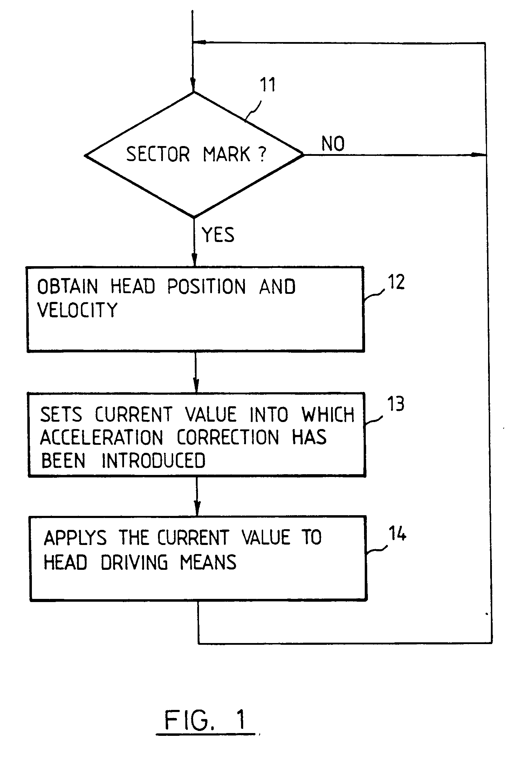

How the invention can be carried out will now be described by way of example, with reference to Figs 1 to 3 of the accompanying drawings, in which:
Fig 1 is a flow chart of a head positioning control method embodying the invention;

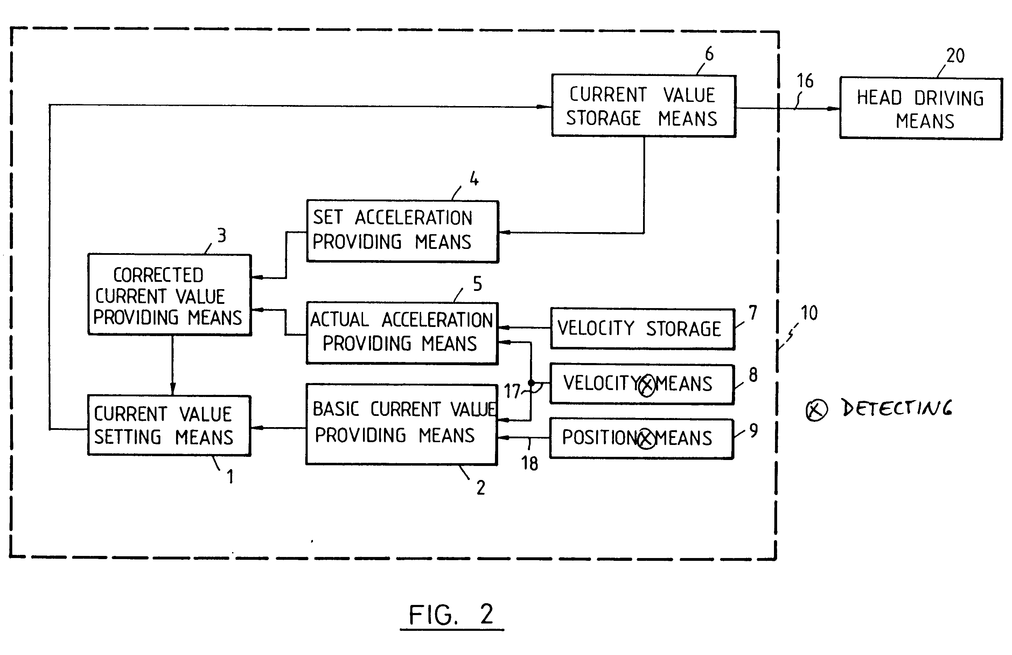

Fig 2 is a block diagram of a head positioning control method embodying the invention; and

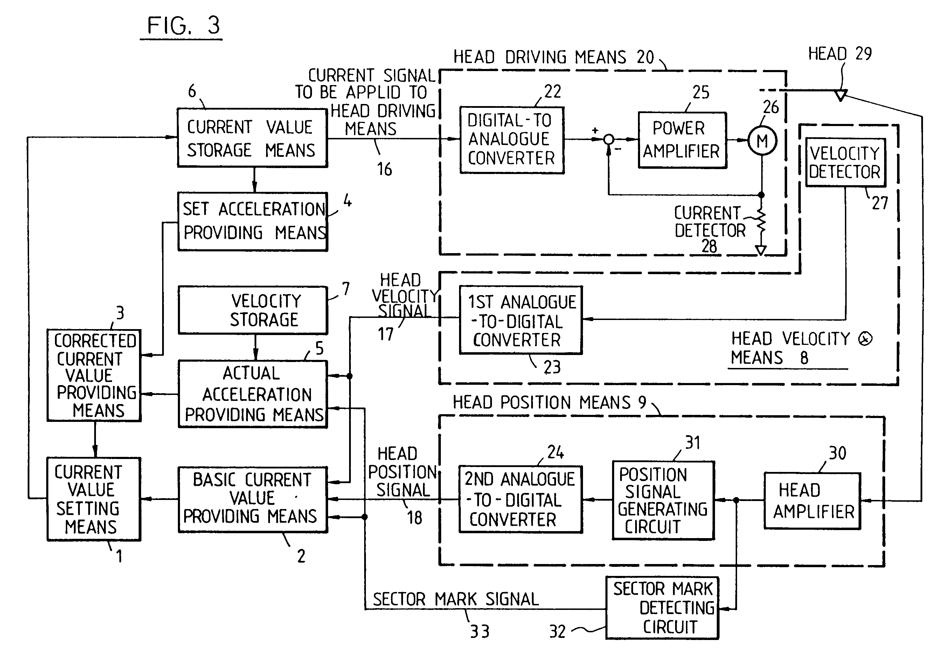

Fig 3 is a more detailed block diagram of the system of Fig 2.

The method and system of the present invention will be described referring to the flow chart of Fig 1 and the block diagram of Fig 2.

In step 1, the inputting of a sector mark is awaited, and when the sector mark is input, a present sampling of the servo position information is initiated.

In step 2, head position signal 18 is taken in from a position means 9 to obtain a head position at the present sampling. Also, in step 2, a head velocity signal 17 is taken in from a velocity means 8 to obtain a head velocity at the present sampling.

In step 3, the acceleration correction which is defined by the difference between the set acceleration of the head after the previous sampling and the actual acceleration of the head after the previous sampling is introduced into the basic current value of the equation (1) which is determined by the head velocity and position at the present sampling obtained in step 2, thereby setting the current value to be applied to the head driving means after the present sampling, the set acceleration of the head after the previous sampling being determined by the current value provided by a current value storage means 6 and set so as to be applied to the head driving means 20 after the previous sampling, and the actual acceleration of the head after the previous sampling being determined by the difference between the head velocity at the previous sampling provided by a velocity storage means 7 and the head velocity at the present sampling provided by a velocity means 8. This set current value is stored in a current value storage means 6.

In step 4, a current signal corresponding to the set current value is applied to the head driving means 20. Thus, the current value to be applied after the present sampling is determined by the head positioning control unit 10 embodying the present invention.

Steps 1 through 4 above are repeated until a velocity control mode is entered by inputting a next head moving instruction after a track following mode, thereby positioning the head on the target track.

The above current value In, which was set so as to be applied to the head driving means after the present sampling can be expressed as: 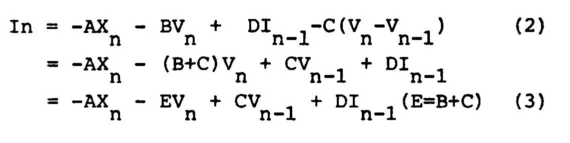
where Vₙ₋₁ is the head velocity at the previous sampling, and Iₙ₋₁ is the current value which was set so as to be applied to the head driving means after the previous sampling. The values of constants A, B, C and D are optimized by the maximum current value, sample period and mechanical rigidity characteristics, depending on each application.

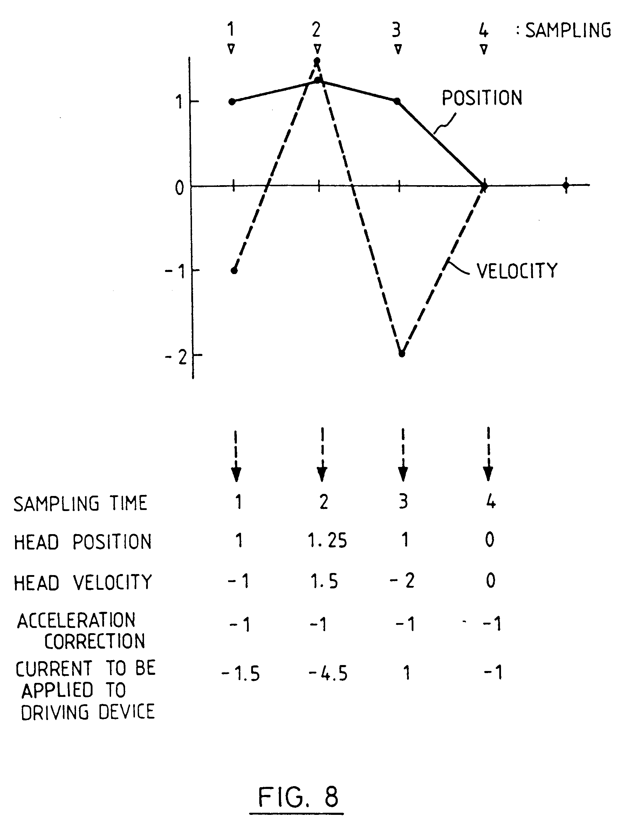

For instance, if $\text{A=M/T²}$ , $\text{B=3M/2T}$ , $\text{C=M/T}$ and D=1, the head may be allowed to rest on the target track at the fourth sampling. This situation is shown in Fig. 8. Fig. 8 shows the normalisation provided by assuming that the sampling interval is 1, the head position when entering the track following mode is 1, the head velocity when entering the track following mode is -1, and the disturbance acceleration is 1.

As may be seen from equation (3), it is better in view of arithmetic efficiency for the current value Iₙ to be set by adding the product of the head position Xₙ at the present sampling and a constant, the product of the head velocity Vₙ at the present sampling and a constant, the product of the head velocity Vₙ₋₁ at the previous sampling and a constant, and the product of the current value Iₙ₋₁ which was set so as to be applied to the head driving means after the previous sampling and a constant. At that time, if the values of those constants are assumed to be 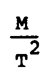
for Xₙ, $\frac{\text{5}}{\text{2}}$ · $\frac{\text{M}}{\text{T}}$ for Vₙ, $\frac{\text{M}}{\text{T}}$ for Vₙ₋₁, and 1 for Iₙ₋₁, respectively, the head may be allowed to rest on the target track at the fourth sampling.

Now, the system shown in Fig. 2 will be described. The velocity means 8 provides the head velocity signal 17, or the head velocity Vₙ at the present sampling. Position means 9 provides the head position signal 18, or head position Xₙ at the present sampling. The velocity Vₙ and position Xₙ of the head at the present sampling is provided to the basic current value providing means 2, and the basic current value providing means 2 provides a basic current value corresponding to the above equation (1), which is defined by Vₙ and Xₙ.
On the other hand, the velocity storage means 7 is storing the head velocity Vₙ₋₁ at the previous sampling. The head velocity Vₙ₋₁at the previous sampling is provided to the actual acceleration providing means 5 along with the head velocity Vₙ at the present sampling, which provides the actual acceleration of the head determined by the difference between Vₙ and Vₙ₋₁. Also, the current value storage means 6 provides to the set acceleration providing means 4 the current value Iₙ₋₁ stored therein and was set so as to be applied to the head driving means 20 after the previous sampling, and the set acceleration providing means 4 provides a set acceleration of the head determined by Iₙ₋₁.

The set acceleration is provided along with the actual acceleration to a corrected current value providing means 3, which provides a corrected current value corresponding to the difference between the set acceleration and the actual acceleration. The corrected current value is provided along with the basic current value to a current value setting means 1, which sets a current value wherein the corrected value is introduced into the basic current value, and which provides the set current value to the current value storage means 6.

The control unit embodying the invention comprises the current value storage means 6 and the velocity storage means 7, which usually consist of a random access memory or a flip-flop register. Also, a microprocessor is employed for the current value setting means 1, the basic current value providing means 2, the corrected current value providing means 3, the set acceleration providing means 4 and the actual acceleration providing means 5. In some cases, the storage means 6 and 7 consist of one-chip microprocessors, which contain the memories along with their setting means and providing means.

The current value setting means 1 provides the set current value to the current value storage means 6 which provides at its output the current signal 16 to be applied to the head driving means. Head velocity signal 17 and head position signal 18 are supplied simultaneously as input to the basic current value providing means 2. The head velocity signal 17 is also supplied as an input to the actual acceleration providing means 5. From the set acceleration providing means 4 and the actual acceleration providing means 5, a set acceleration and an actual acceleration are provided as inputs to the corrected current value providing means 3. From the basic current value providing means 2 and corrected current value providing means 3, a basic current value and a corrected current value are provided as inputs to the current value setting means 1.

The head driving means 20 includes a voice coil motor or stepper motor 26 (Fig. 3). The output of a current detector 28 is fed back to the input of a power amplifier 25, constituting a constant-current drive control circuit. Accordingly, a constant-current drive of a value determined by the current signal 16 is supplied to the driving motor 26.

Usually, a tachometer is employed as a velocity detector 27, and an output proportional to the head velocity is digitised using a first analog-to-digital converter 23 and the digitised output is supplied as the head velocity signal 17 to the basic current value providing means 2 and the actual acceleration providing means 5. The velocity detector 27 and the first analog-to-digital converter 23 constitute the head velocity means 8.

A head 29 reads and writes data from and to a record disk, and is used to read out the servo position information. The servo position information read out by the head 29 is amplified and shaped by a head amplifier 30, and sent to a position signal generating circuit 31. The position signal generating circuit 31 is a circuit which comprises a timing circuit, sample hold circuit, etc., consists of a circuit suitable for the servo position information pattern to be read out, and converts the servo position information to a position signal. The position signal is digitised in a second analogue-to-digital converter 24 and sent to the basic current value providing means 2 as the head position signal 18. The head amplifier 30, the position signal generating circuit 31 and the second analog-to-digital converter 24 constitute the head position means 9.

In the velocity storage means 7, the head velocity which was read in at the previous sampling is stored. The current value storage means 6 stores the current value to be applied to the motor 26, and its output is sent as the current signal 16 to a digital-to-analog converter 22 in the head driving means. The output of the digital-to-analog converter 22 is sent to the power amplifier 25 and converted to a current to drive the motor 26.

A sector mark signal 33, indicating the beginning of the servo data is obtained by detecting a region erased by a d.c. current. This detection is done by means of a sector mark detecting circuit 32, the erased region usually being positioned at the beginning of the servo position information.

Now, the steps of the arithmetic operation and the processing in this embodiment are described.

Step 1. The inputting of the sector mark is awaited: the present sampling of the servo position information is initiated upon the inputting of the sector mark.

Step 2. The head position signal 18 is taken into the basic current value providing means 2 from the head position means 9, and simultaneously the head velocity signal 17 is taken thereinto from the head velocity means 8.

Step 3. The driving current value which was set after the previous sampling is taken into the set acceleration providing means 4 from the current value storage means 6, and simultaneously the head velocity at the previous sampling is taken thereinto from the velocity storage means 7, thereby setting the current value to be applied to the head driving means 20 after the present sampling, said current value including the basic current value, into which the corrected current value corresponding to the acceleration correction of the head has been introduced, as in the above described equation (2) or (3) for instance.

Step 4. This set current value is stored in the current value storage means 6, and also is applied to the head driving means 20 as the current signal 16 to drive the motor 26 as soon as the present sampling has been processed.

Step 5. To update the head velocity, the head velocity at the present sampling is stored in the velocity storage means 7.

Step 6. Return to the step 1.

Application of the invention enables correction of the off-track caused by disturbances or the like, to be made by addition of a simple logic circuit and arithmetic operation for adaptation to small-sized disk units.

## Claims

1. A method of controlling the position of a data transducer head so that it follows a predetermined track on a record disk, the method comprising:
applying a driving current (Iₙ) of set value to a driving means for positioning the head;
using the head to sample servo position information in a sector on a disk record medium to detect the position of the head (Xₙ) at a present sampling instant;
detecting the velocity of the head (Vₙ) at the present sampling instant; and
deriving the value of the driving current (Iₙ) from the position and velocity of the head detected at the present sampling instant;
the method being characterised in that the derivation of the driving current is also dependent on the velocity of the head at the previous sampling instant (Vₙ₋₁) and on the value of the driving current set after the previous sampling instant (Iₙ₋₁) so as to correct for any difference between the set acceleration of the head after the previous sampling instant and the actual acceleration of the head after the previous sampling instant.

2. A method as claimed in claim 1, wherein the value of the driving current is calculated by adding the product of the position of the head at the present sampling instant and a predetermined real non-zero constant A, the product of the velocity of the head at the present sampling instant and a predetermined real non-zero constant E, the product of the velocity of the head at the previous sampling instant and a predetermined real non-zero constant C, and the product of the value of the driving current value set after the previous sampling instant and a predetermined real non-zero constant D.

3. A method as claimed in claim 2, wherein the predetermined constants A, E, C and D are 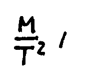 $\frac{\text{5M}}{\text{2T}}$, $\frac{\text{M}}{\text{T}}$ and 1, respectively, where T is a sampling interval and M is a constant for converting an acceleration to a current.

4. An apparatus for controlling the position of a data transducer head so that it follows a predetermined track on a record disk, the apparatus comprising:
a head driving means (2);
a velocity detector (8) for detecting the velocity of the head;
a position detector (9) for detecting the position of the head;
a velocity value storage means (7) for storing the values of head velocity (Vₙ) detected by the velocity detector;
a current value storage means (6) for storing the current (Iₙ) value set to be applied to the head driving means;
a basic current value deriving means (2) for deriving a basic current value from the head position and velocity detected by the position and velocity detectors, respectively;
an actual acceleration deriving means (5) for deriving the actual acceleration of the head from the differences between the velocity (Vₙ) at a present sampling instant and the velocity (Vₙ₋₁) at the previous sampling instant, the latter velocity being obtained from the velocity value storage means;
a set acceleration calculator (4) for calculating a set acceleration
from the set current (Iₙ₋₁) value stored in the current value storage means, that current value having been set after the previous sampling instant;
a corrected current value calculator (3) for calculating a corrected current value corresponding to the difference between the actual acceleration and the set acceleration;
a new current value setting means (1) for setting a new current value determined by the basic current value and the corrected current value; and
means for reading the new current value into the current value storage means.

5. An apparatus as claimed in claim 4, wherein the head driving means includes a d.c. motor.

6. An apparatus as claimed in claim 5, wherein the d.c. motor is a voice coil motor.

## Patentansprüche

1. Ein Verfahren zur Steuerung der Position eines Wandlerkopfes für Daten, so daß er einer vorbestimmten Spur auf einer Aufzeichnungsplatte folgt, wobei das Verfahren folgendes beinhaltet:
Anlegen eines Ansteuerstroms (Iₙ) mit einem voreingestellten Wert an ein Antriebsmittel zur Positionierung des Kopfes;
Verwenden des Kopfes zum Abtasten von Servopositionsinformationen in einem Sektor auf einem Plattenaufzeichnungsmedium zur Ermittlung der Kopfposition (Xₙ) zu einem aktuellen Abtastzeitpunkt;
Ermitteln der Geschwindigkeit des Kopfes (Vₙ) zu dem aktuellen Abtastzeitpunkt; und
Ableiten des Wertes des Ansteuerstroms (Iₙ) aus Kopfposition und -geschwindigkeit, die zu dem aktuellen Abtastzeitpunkt ermittelt wurden;
wobei das Verfahren dadurch gekennzeichnet ist, daß die Ableitung des Ansteuerstroms auch von der Kopfgeschwindigkeit zum vorherigen Abtastzeitpunkt (Vₙ₋₁) und von dem Wert des nach dem vorherigen Abtastzeitpunkt (Iₙ₋₁) eingestellten Ansteuerstroms abhängig ist, um ggf. auftretende Abweichungen zwischen der eingestellten Beschleunigung des Kopfes nach dem vorherigen Abtastzeitpunkt und der tatsächlichen Beschleunigung des Kopfes nach dem vorherigen Abtastzeitpunkt zu korrigieren.

2. Ein Verfahren gemäß Patentanspruch 1, bei dem der Wert des Ansteuerstroms berechnet wird, indem das Produkt aus der Kopfposition zum aktuellen Abtastzeitpunkt und einer vorbestimmten realen Konstanten A ungleich Null, das Produkt aus der Kopfgeschwindigkeit zum aktuellen Abtastzeitpunkt und einer vorbestimmten realen Konstanten E ungleich Null, das Produkt aus der Kopfgeschwindigkeit zum vorherigen Abtastzeitpunkt und einer vorbestimmten, realen Konstanten C ungleich Null sowie das Produkt aus dem nach dem vorherigen Abtastzeitpunkt eingestellten Wert für den Ansteuerstrom und einer vorbestimmten, realen Konstanten D ungleich Null addiert werden.

3. Ein Verfahren wie in Patentanspruch 2 offenbart, bei dem die vorbestimmten Konstanten A, E, C und D gleich M/T², 5M/2T, M/T bzw. 1 sind, wobei T ein Abtastintervall und M eine Konstante für die Konvertierung einer Beschleunigung in einen Strom ist.

4. Eine Vorrichtung zur Steuerung der Position eines Wandlerkopfes für Daten, so daß er einer vorbestimmten Spur auf einer Aufzeichnungsplatte folgt, wobei die Vorrichtung folgendes beinhaltet:
ein Kopfantriebsmittel (2);
einen Geschwindigkeitsdetektor (8) zur Ermittlung der Kopfgeschwindigkeit;
einen Positionsdetektor (9) zur Ermittlung der Kopfposition;
ein Speichermittel für Geschwindigkeitswerte (7) zum Speichern der vom Geschwindigkeitsdetektor ermittelten Werte für die Kopfgeschwindigkeit (Vₙ);
ein Stromwertspeichermittel (6) zum Speichern des eingestellten, an das Kopfantriebsmittel anzulegenden Stromwertes (Iₙ);
ein Basisstromwerte ableitendes Mittel (2) zum Ableiten eines Basisstromwerts aus der Kopfposition und -geschwindigkeit, die von den Positions- bzw. Geschwindigkeitsdetektoren ermittelt werden;
ein die tatsächliche Beschleunigung ableitendes Mittel (5) zum Ableiten der tatsächlichen Geschwindigkeit des Kopfes aus der Differenz zwischen der Geschwindigkeit (Vₙ) zu einem aktuellen Abtastzeitpunkt und der Geschwindigkeit (Vₙ₋₁) zum vorherigen Abtastzeitpunkt, wobei man die zuletzt genannte Geschwindigkeit aus dem Geschwindigkeitswertspeichermittel erhält;
eine Recheneinheit (4) zur Berechnung einer einzustellenden Beschleunigung aus dem eingestellten Stromwert I(ₙ₋₁), der im Stromwertspeichermittel gespeichert ist, wobei dieser Stromwert nach dem vorherigen Abtastzeitpunkt eingestellt wurde;
eine Recheneinheit (3) für korrigierte Stromwerte zur Berechnung eines korrigierten Stromwertes, der der Differenz zwischen der tatsächlichen Beschleunigung und der eingestellten Beschleunigung entspricht;
ein neues Stromwert einstellendes Mittel (1) zum Einstellen eines neuen Stromwertes, der durch den Basisstromwert und den korrigierten Stromwert bestimmt wurde; und
Mittel zum Einlesen des neuen Stromwertes in das Stromwert speichernde Mittel.

5. Eine Vorrichtung gemäß Patentanspruch 4, bei der das Kopfantriebsmittel einen Gleichstrommotor beinhaltet.

6. Eine Vorrichtung gemäß Patentanspruch 5, bei der der Gleichstrommotor als Schwingspulenmotor ausgeführt ist.

## Revendications

1. Procédé pour contrôler la position d'une tête de transducteur de données de sorte qu'elle suive une piste prédéterminée sur un disque d'enregistrement, le procédé comprenant:
l'application d'un courant d'attaque (Iₙ) de valeur établie à un moyen d'entraînement pour positionner la tête;
l'utilisation de la tête pour échantillonner une information de position asservie dans un secteur d'un support d'enregistrement sur disque afin de détecter la position de la tête (Xₙ) à un instant d'échantillonnage présent;
la détection de la vitesse de la tête (Vₙ) à l'instant d'échantillonnage présent; et
la dérivation de la valeur du courant d'attaque (Iₙ) de la position et de la vitesse de la tête détectée à l'instant d'échantillonnage présent;
le procédé étant caractérisé en ce que la dérivation du courant d'attaque dépend également de la vitesse de la tête à l'instant d'échantillonnage précédent (Vₙ₋₁) et de la valeur du courant d'attaque établie après l'instant d'échantillonnage précédent (Iₙ₋₁) de manière à corriger toute différence entre l'accélération établie de la tête après l'instant d'échantillonnage précédent et l'accélération véritable de la tête après l'instant d'échantillonnage précédent.

2. Procédé selon la revendication 1, dans lequel la valeur du courant d'attaque est calculée en ajoutant le produit de la position de la tête à l'instant d'échantillonnage présent et d'une constante non nulle réelle prédéterminée A, le produit de la vitesse de la tête à l'instant d'échantillonnage présent et d'une constante non nulle réelle prédéterminée E, le produit de la vitesse de la tête à l'instant d'échantillonnage précédent et d'une constante non nulle réelle prédéterminée C, et le produit de la valeur de la valeur du courant d'attaque après l'instant d'échantillonnage précédent et d'une constante non nulle réelle prédéterminée D.

3. Procédé selon la revendication 2, dans lequel les constantes prédéterminées A, E, C et D sont respectivement 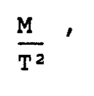 $\frac{\text{5M}}{\text{2T}}$ , $\frac{\text{M}}{\text{T}}$ et 1, où T est un intervalle d'échantillonnage, et M est une constante pour convertir une accélération en courant.

4. Appareil pour contrôler la position d'une tête de transducteur de données de sorte qu'elle suive une piste prédéterminée sur un disque d'enregistrement, l'appareil comprenant:
un moyen d'entraînement de tête (20);
un détecteur de vitesse (8) pour détecter la vitesse de la tête;
un détecteur de position (9) pour détecter la position de la tête;
un moyen d'emmagasinage de valeurs de vitesse (7) pour emmagasiner les valeurs de la vitesse de la tête (Vₙ) détectée par le détecteur de vitesse;
un moyen d'emmagasinage de valeur de courant (6) pour emmagasiner la valeur du courant (Iₙ) établie à appliquer au moyen d'entraînement de tête.
un moyen de dérivation de valeur de courant de base (2) pour dériver une valeur de courant de base à partir de la position de la tête et de la vitesse détectées respectivement par les détecteurs de position et de vitesse;
un moyen de dérivation d'accélération véritable (5) pour dériver l'accélération véritable de la tête à partir de la différence entre la vitesse (Vₙ) à l'instant d'échantillonnage présent et la vitesse (Vₙ₋₁) à l'instant d'échantillonnage précédent, cette dernière vitesse étant obtenue à partir du moyen d'emmagasinage de valeurs de vitesse;
un calculateur d'accélération établie (4) pour calculer une accélération établie à partir de la valeur de courant établie (Iₙ₋₁) emmagasinée dans le moyen d'emmagasinage de valeur de courant, cette valeur de courant ayant été établie après l'instant d'échantillonnage précédent;
un calculateur de valeur de courant corrigée (3) pour calculer une valeur de courant corrigée correspondant à la différence entre l'accélération véritable et l'accélération établie;
un moyen d'établissement de nouvelle valeur de courant (1) pour établir une nouvelle valeur de courant déterminée par la valeur de courant de base et la valeur de courant corrigée; et
et un moyen pour introduire la nouvelle valeur de courant dans le moyen d'emmagasinage de valeur de courant.

5. Appareil selon la revendication 4, dans lequel le moyen d'entraînement de tête est un moteur à courant continu.

6. Appareil selon la revendication 5, dans lequel le moteur à courant continu est un moteur à bobine mobile.
